# FASCICULE DE BREVET EUROPEEN

(11) **EP 0 580 519 B1**
(45) Date de publication et mention de la délivrance du brevet: **07.10.1998**
(21) Numéro de dépôt: 93401919.1
(22) Date de dépôt: 23.07.1993
(51) Int. Cl.: B09B 3/00, C04B 28/02

(54) **Procédé et appareillage pour l'obtention de matériaux moulés stabilisés à partir de déchets**
Verfahren und Vorrichtung zur Herstellung von stabilisierten geformten Materialien aus Abfall
Method and device for the obtention of stabilized molded materials from waste

(30) Priorité: 24.07.1992 FR 9209196
(43) Date de publication de la demande: 26.01.1994
(73) Titulaire: Pichat, Philippe, 75004 Paris (FR)
(72) Inventeur: Pichat, Philippe, 75004 Paris (FR)
(74) Mandataire: Ballot, Paul Denis Jacques

(56) Documents cités:
- EP-A- 0 375 913
- EP-A- 0 389 328
- EP-A- 0 427 899
- WO-A-88/09228
- WO-A-91/11253
- FR-A- 2 570 319
- US-A- 3 880 664
- US-A- 5 103 578

## Description

La présente invention a trait au domaine du traitement, par solidification, des déchets de diverses natures en vue d'obtention de matériaux inertes, aptes à être stockés sur un site approprié.

Elle concerne plus particulièrement un procédé, ainsi que l'appareillage approprié, permettant d'obtenir, à partir des déchets sous diverses formes, des matériaux moulés, par exemple par extrusion, dont la stabilité physico-chimique a été notablement améliorée.

Jusqu'à présent la technique de solidification de déchets consiste à introduire le déchet simultanément à au moins un agent de solidification dans un malaxeur du même type que ceux utilisés pour la fabrication des bétons. Le mélange durci ou solidifié est ensuite évacué pour stockage en décharge sur site approprié.

Outre le fait que cette technique est réalisée en discontinu, il n'y a pas de contrôle précis de la température ni des caractéristiques rhéologiques du déchet et de son mélange avec les réactifs de solidification. Compte-tenu de l'importance de ces paramètres, comme on le verra plus loin, sur les réactions diverses et complexes conduisant à la stabilisation des déchets, il n'est pas possible d'atteindre les objectifs de qualité exigés actuellement au plan écologique, que ce soit avec les techniques évoquées ci-dessus ou avec les techniques décrites dans le document EP-A3-0 375 913 qui évoque un procédé conforme au préambule de la revendication 1.

L'un des buts essentiels de l'invention a consisté à rechercher pour l'ensemble des principaux types de déchets les plus courants, une stabilité optimum au stockage après solidification, ainsi qu'à mettre au point un procédé de traitement industriel en continu, adaptable à de nombreux types de déchets et permettant de transformer ces derniers en masses moulées, par exemple extrudées, aptes à être stockées directement sur les sites de décharge.

L'invention fait appel à la technique connue du mélangeage ou malaxage du déchet à une température contrôlée, sensiblement constante pour un type de déchets donné, avec un ou plusieurs réactifs et/ou liants hydrauliques permettant d'assurer l'inertage puis du passage en force de la masse encore fluide dans une extrudeuse pour obtenir un matériau moulé.

Toutefois, selon ces caractéristiques essentielles et qui permettent de résoudre le problème ci-avant posé, le procédé de l'invention est caractérisé en ce que le déchet, qui est conditionné sous forme de mélange avec le ou les réactifs à une limite de liquidité comprise entre 25 % et 45 %, est malaxé sous un vide inférieur à 10 mm de Hg.

Le fait de réaliser et entretenir le mélange sous un vide permanent, en pratique maintenu entre 0,1 et 10 mm de Hg, présente de nombreux avantages : tout d'abord on peut ainsi éliminer tous les produits volatils à température ordinaire qui sont contenus dans les déchets, notamment industriels, comme par exemple : des hydrocarbures légers, des solvants organiques, l'ammoniac, les amines .... etc, ces produits n'étant pas souhaitables pour la stabilité à long terme des matériaux obtenus ; ensuite sous l'effet d'un vide poussé, il se produit un rapprochement des diverses particules entre elles qui constituent le matériau extrudé, ce qui entraîne une diminution intéressante de la porosité et une augmentation de la cohésion. Enfin, simultanément à ces phénomènes, l'avancement continu du matériau dans le processus de malaxage et d'extrusion provoque un renouvellement permanent des surfaces exposées au vide et donne bien ainsi un matériau final ou extrudat d'homogénéité bien supérieure à celle obtenue par la technique conventionnelle.

La maîtrise de la température constitue également un paramètre important et critique dans le procédé de l'invention. En effet, de cette température, dépendent essentiellement : les tensions de vapeur des constituants du mélange ainsi que les vitesses des diverses réactions qui ont lieu lors du phénomène de stabilisation, telles que : précipitations, substitutions, absorptions, hydratations, solidifications. La température du mélange varie essentiellement pour deux raisons : d'une part le déclenchement de réactions physico-chimiques exothermiques ou endothermiques et, d'autre part, la transformation de l'énergie mécanique d'agitation, dans le malaxeur, en énergie thermique. Comme on le verra plus loin, divers moyens pourront être utilisés, selon l'invention, pour contrôler et optimiser cette température.

Selon une autre caractéristique de l'invention, les opérations de malaxage et moulage par extrusion sous vide sont couplées à un incinération de matières volatiles extraites du déchet par le vide, et les déchets d'épurations de fumées (DEF) issus de l'incinération sont recyclés dans l'opération de malaxage.

L'invention a également pour objet un appareillage pour la mise en oeuvre, de façon continu, du procédé susvisé. L'appareillage est essentiellement constitué par la combinaison d'un malaxeur relié, par une grille de division du mélange de déchets en cours de stabilisation, à un dispositif de moulage muni de vis avec tête d'extrusion, ce dernier étant en liaison ouverte, par l'intermédiaire d'un moyen de pompe(s) à vide, avec un incinérateur. Le malaxeur et le dispositif de moulage sont munis d'un moyen de réglage et contrôle de la température afin d'assurer selon les cas, le réchauffage ou le refroidissement des déchets en cours de solidification.

L'invention a également pour objet l'utilisation du procédé et du dispositif de l'invention, comme caractérisée dans la revendication 7.

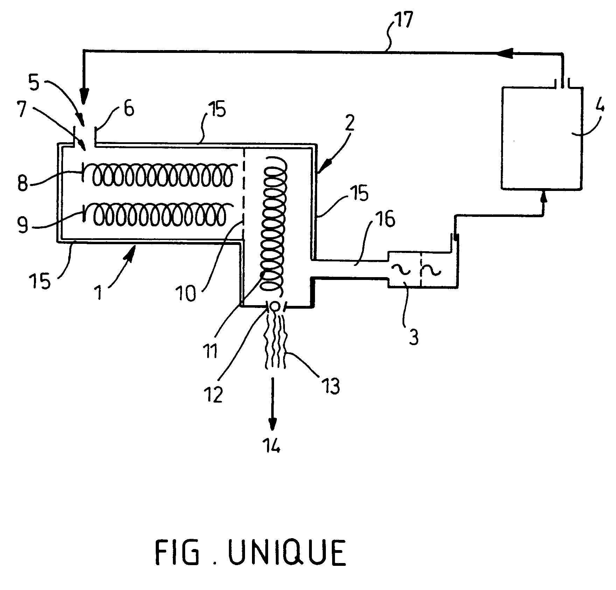

Afin de faciliter la compréhension et fournir d'autres détails et caractéristiques, on décrira maintenant un mode de réalisation et de fonctionnement, de façon non limitative, en se référant à un schéma simplifié, selon la figure unique jointe, d'un appareillage de mise en oeuvre du procédé sus-décrit.

L'installation de stabilisation des déchets, apte à fonctionner de façon continue, comprend essentiellement : une cuve ou réacteur de mélange ou malaxage 1, suivie d'un dispositif de moulage de type extrudeuse 2, lesquels sont maintenus sous vide par un ensemble de pompage 3 (par exemple des pompes à double étage) relié à un incinérateur 4 pour les matières volatiles récupérées.

Le déchet 5, sous une forme qui sera précisée plus loin, est introduit par l'ajustage 6 dans la malaxeur 1 et l'on ajoute par une ouverture 7 le ou les réactifs destinés à la stabilisation, par exemple des agents de solidification de type connu en soi. L'ensemble est malaxé, par exemple par les vis 8, 9 mais qui peuvent être substituées par des agitateurs ou autres moyens connus. On oblige le mélange à passer à travers un ensemble perforé du type grille 10, pour assurer une division du matériau, avant l'introduction automatique dans l'extrudeuse 2 où la vis 11 force le matériau à passer dans la buse 12, le déchet stabilisé 13 sortant sous forme de boudin ou toute autre forme souhaitée pour être ensuite envoyé, par 14, sur le site de stockage.

Le malaxeur 1 et l'extrudeuse 2 sont avantageusement réalisés en une double paroi 15 à l'intérieur de laquelle circule un fluide caloporteur, par exemple de type giltherm (marque déposée) ou autre, pour assurer la régulation de température.

L'installation est reliée par la canalisation 16 aux pompes à vide 3 et les produits volatils du déchet, recueillis par la forte dépression, par exemple 0,5 à 5 mm de Hg, sont envoyés dans l'incinérateur 4. Selon une disposition avantageuse de l'invention, les résidus ou déchets d'épuration des fumées (REF ou DEF) sont envoyés par 17 en tête du malaxeur 1. En opérant ainsi, le but visé par l'invention à savoir disposer d'un système sans rejet nocif pour l'environnement, est ainsi atteint grâce à la technique résumée ci-dessus.

En pratique, tous types de déchets peuvent être soumis au traitement selon l'invention, dont notamment : les résidus d'incinération des déchets municipaux industriels, et d'hopitaux ; ces déchets peuvent être à l'origine sous diverses formes telles que liquides, solides, boues, pâtes, etc....

Toutefois, comme précisé ci-avant, les déchets ou mélanges qui sont soit trop fluides soit trop pâteux et qui n'ont pas la limite de liquidité de fourchette ci-avant précisée sont exclus du domaine d'application de l'invention. Lorsque les déchets sont sous forme solide, comme par exemple des terres souillées au autres matières, il convient que les diamètres moyens des particules soient de préférence inférieurs à 100 microns.

Selon une forme préférée de réalisation, on s'arrange pour que le mélange introduit dans la malaxeur, et constitué par les déchets et le réactif ou agent de solidification/stabilisation, se présente sous la forme d'une pâte ayant la limite de liquidité comprise dans l'intervalle précité.

Afin de mieux faire comprendre encore l'intérêt du procédé et dispositif de l'invention, on décrira maintenant ci-dessous les résultats d'expérimentations, choisies parmi de nombreuses autres, dans lesquelles on a comparé les performances, au plan de la stabilité de matériaux de déchets obtenus, entre le malaxage/extrudage connu et la mise en oeuvre du dispositif susvisé.

### Exemples de réalisation :

On a travaillé, comme dans le cas du brevet français FR-A-2-644-372 et à titre de déchet, sur une cendre volante d'incinération (CV) d'ordures ménagères dont la composition était approximativement la suivante : Si : 23% ; Al : 7,0%, Fe : 4,0%, Pb : 1,0% ; Zn : 1,9% ; Ca : 8% ; Mg : 2,5 % ; Ba : 0,3% ; K : 4%, Na : 3% ; Ti : 0,7% ; Cd : 0,03% ; Sn : 0,3% ; Cr : 0,1% ; Cl : 1% ; S : 3% ; N : 4% ; P : 5% ; carbone organique : 1% matières des imbrûlés.

Un échantillon représentatif de telles cendres volantes, soumis à la norme française DIN 38414 relarguait par lixiviation les éléments toxiques suivants, exprimés en p.p.m. (parties par million) ; Pb : 6,3 ; Cu : 0,2 ; Cd : 60 ; Zn : 900 ; Fe : 0,2.
a) Dans une première série d'essais, on a ajouté à 133,3 Kg de CV 30 Kg d'eau dans laquelle on avait dispersé 0,183 Kg de chaux vive (CaO) en malaxant de façon habituelle. Après compactage du matériau obtenu pour les lixiviations, selon la norme précitée DIN 38414 et après 3 mois (en p.p.m).
   Pb : 0,4 ; Cr : 0,2 ; Cu : < 0,1 ; Cd < 0,2 ; Zn : 1,5 la résistance à la compression était de 8,5 mégaPascals.
b) Alors que dans les essais ci-dessus le malaxage était effectué selon la façon traditionnelle analogue à la fabrication des bétons de ciment Portland, on a repris les mêmes expérimentations sur le même déchet et toutes autres conditions étant égales par ailleurs sauf que les opérations de malaxage/extrudage ont été faites sous vide et à température contrôlée, selon la même mise en oeuvre que sur le schéma de la figure annexée ici. La température était maintenu sensiblement à 20°C et la dépression (ou vide) correspondait à 0,5 mm de Hg.

La lixiviation du matériau extrudé a donné les résultats suivants (p.p.m) :
Pb :< 0,1 ; Cr : < 0,1 ; Cu < 0,1 ; Cd < 0,1 ; Zn < 0,1 on a donc amélioré très sensiblement la stabilité du déchet moulé.

Par ailleurs, alors que dans les dispositifs industriels de malaxage conventionels on pouvait traiter 12 tonnes de déchets à l'heure pour une puissance de 270 chevaux, il a été possible, grâce au procédé et objectif de l'invention, de passer à un débit nettement plus élevé de 18 tonnes de déchets à l'heure.

## Revendications

1. Procédé pour l'obtention de matériaux moulés stabilisés au plan physico-chimique à partir de déchets de diverses natures et origines, du type consistant à malaxer le déchet à température contrôlée, sensiblement constante pour un type de déchets donné, l'opération étant effectuée en continu, avec au moins un agent de solidification de type liant hydraulique, et à mouler par extrusion le matériau solide obtenu, caractérisé en ce que le déchet, conditionné sous forme de mélange de limite de liquidité comprise entre 25 % et 45 % est malaxé sous vide inférieur à 10 mm de Hg.

2. Procédé selon la revendication 1, caractérisé en ce que le vide dans ladite opération continue correspond à un intervalle de 0,1 à 10 mm Hg.

3. Procédé selon l'une quelconque des revendications 1 ou 2, caractérisé en ce que les opérations de malaxage sous vide et moulage par extrusion sont couplées à une incinération des matières volatiles extraites du déchet par le vide et en ce que les déchets d'épuration de fumées (DEF) issus de l'incinération sont recylés dans l'opération de malaxage.

4. Appareillage pour la mise en oeuvre du procédé selon l'une quelconque des revendications 1 à 3, caractérisé en ce qu'il est essentiellement constitué par la combinaison d'un malaxeur (1) relié, par une grille de division de matériau (10) à un dispositif de moulage (2), muni de vis (11) avec tête d'extrusion (12), ce dernier étant en liaison ouverte par l'intermédiaire d'un moyen de pompe(s) à vide (3), avec un incinérateur (4).

5. Appareillage selon la revendication 4, caractérisé en ce que le malaxeur et/ou le dispositif de moulage sont munis d'un moyen de réglage et contrôle de la température afin d'assurer un refroidissement ou un réchauffage du mélange de déchets en cours de solidification.

6. Appareillage selon la revendication 5, caractérisé en ce que ledit moyen de réglage de la température est constitué par une double paroi (15) du malaxeur (1) et/ou du dispositif de moulage (2) à l'intérieur de laquelle circule un fluide caloporteur.

7. Application du procédé et de l'appareillage selon l'une quelconque des revendications 1 à 6 à la solidification et au moulage par extrusion de déchets choisis dans le groupe constitué par : déchets d'incinération d'ordures ménagères, déchets industriels, déchets d'hopitaux, lesdits déchets, sous forme originelle de solides, liquides, boues, pâtes par exemple, étant introduits à l'opération de malaxage et avant addition de l'agent de solidification, sous forme de mélange semi-pâteux ayant la limite de liquidité comprise entre 25% et 45%.

## Claims

1. A method of obtaining physically and chemically stabilised moulded materials from waste of various natures and origins of the type consisting in mixing the waste at a controlled temperature which is substantially constant for a given type of waste, the operation being carried out continuously with at least one solidifying agent of the hydraulic binder type and moulding the solid material obtained by extrusion, characterised in that the waste, conditioned in the form of a mixture with a liquidity limit ranging between 25% and 45% is mixed under vacuum at less than 10 mm of Hg.

2. A method as claimed in claim 1, characterised in that the vacuum in said continuous operation corresponds to a range of from 0.1 to 10 mm Hg.

3. A method as claimed in any one of claims 1 or 2, characterised in that the operations of mixing under vacuum and extrusion moulding are coupled with incineration of the volatile substances extracted from the waste by the vacuum and in that the smoke tailings (ST) produced by incineration are recycled to the mixing operation.

4. A set of equipment for implementing the method as claimed in any one of claims 1 to 3, characterised in that it essentially consists of a combined malaxator (1) connected by a screen for breaking down the material (10) to a moulding device (2) provided with screws (11) with an extrusion head (12), this latter being openly linked by means of a vacuum pump (or pumps) (3) to an incinerator (4).

5. A set of equipment as claimed in claim 4, characterised in that the malaxator and/or the moulding device are fitted with a means for regulating and controlling the temperature in order to cool or heat the waste mixture during solidification.

6. A set of equipment as claimed in claim 5, characterised in the said temperature regulating means consists of a double wall (15) of the malaxator (1) and/or the moulding device (2) inside which a heat-exchanging fluid is circulated.

7. Application of the method and equipment as claimed in any one of claims 1 to 6 to the solidification and extrusion moulding of waste selected from the group comprising incinerated household waste, industrial waste, hospital waste, said waste, in the original solid, liquid, sludge or paste form for example, being introduced into the mixing operation and being in the form of a semi-paste mixture with a liquidity limit ranging between 25% and 45% before the addition of the solidifying agent.

## Patentansprüche

1. Verfahren zum Erhalten geformter, stabilisierter Materialien im physikalisch-chemischen Sinne aus Abfällen verschiedener Art und verschiedenen Ursprungs, das der Art nach darin besteht, den Abfall bei kontrollierter, für einen gegebene Art von Abfällen konstanter Temperatur durchzukneten, wobei der Vorgang kontinuierlich mit mindestens einem Verfestigungsmittel nach Art eines hydraulischen Bindemittels bewirkt wird, und durch Extrusion das erhaltene, feste Material zu formen, dadurch gekennzeichnet, daß der Abfall, der in Form einer Mischung mit einer Flüssigkeitsgrenze aufbereitet ist, die zwischen 25% und 45% liegt, im Vakuum mit weniger als 10 mm HG durchgeknetet wird.

2. Verfahren nach Anspruch 1, dadurch gekennzeichnet, daß das Vakuum, in dem der genannte Vorgang fortfährt, einem Intervall von 0,1 bis 10 mm Hg entspricht.

3. Verfahren nach irgendeinem der Ansprüche 1 oder 2, dadurch gekennzeichnet, daß die Durchknetvorgänge im Vakuum und der Formvorgang durch Extrusion mit einer Verbrennung flüchtiger Materialien gekoppelt sind, die aus dem Abfall durch das Vakuum abgezogen wurden, und daß die Abfälle aus der Reinigung der Rauchgase (DEF), die sich aus der Verbrennung ergeben, im Durchknetvorgang rückgeführt werden.

4. Vorrichtung zum Durchführen des Verfahrens nach irgendeinem der Ansprüche 1 bis 3, dadurch gekennzeichnet, daß sie im wesentlichen durch die Kombination einer Kneteinrichtung (1) gebildet ist, die durch ein Gitter zum Abteilen von Material (10) mit einer Formvorrichtung (2) verbunden ist, die mit einer Schnecke (11) mit Extrusionskopf (12) versehen ist, wobei diese Formvorrichtung mittels Vakuumpump(en)mitteln (3) in offener Verbindung mit einer Verbrennungseinrichtung (4) steht.

5. Vorrichtung nach Anspruch 4, dadurch gekennzeichnet, daß die Kneteinrichtung und/oder die Formvorrichtung mit Regulier- und Steuermitteln für die Temperatur versehen sind, um eine Abkühlung oder Erwärmung der Mischung aus Abfällen im Verlauf der Verfestigung sicherzustellen.

6. Vorrichtung nach Anspruch 5, dadurch gekennzeichnet, daß die Mittel zum Regulieren der Temperatur von einer Doppelwand (15) der Kneteinrichtung (1) und/oder der Formvorrichtung (2) gebildet sind, innerhalb deren ein wärmeförderndes Strömungsmittel umläuft.

7. Anwendung des Verfahrens und der Vorrichtung nach irgendeinem der Ansprüche 1 bis 6 bei der Verfestigung und beim Formen durch Extrusion von Abfällen, die in der Gruppe ausgewählt sind, die gebildet ist durch: Abfälle aus der Verbrennung von Hausmüll, Industriemüll und Krankenhausmüll, wobei die genannten Müllsorten in der ursprünmglichen Form beispielsweise von Feststoffen, Flüssigkeit, Schlamm und Pasten in den Druchknetvorgang und vor dem Zusatz des Verfestigungsmittels in Form einer halb-pastenartigen Mischung eingebracht werden, bei der die Flüssigkeitsgrenze zwischen 25% und 45% liegt.
